# EUROPEAN PATENT SPECIFICATION

(11) **EP 3 677 819 B1**
(45) Date of publication and mention of the grant of the patent: **22.03.2023**
(21) Application number: 18925055.8
(22) Date of filing: 13.11.2018
(51) Int. Cl.: F16K 27/00, F16K 15/02, B60H 1/00, F16K 27/02

(54) **CHECK VALVE ASSEMBLY**
RÜCKSCHLAGVENTILANORDNUNG
DISPOSITIF DE CLAPET ANTI-RETOUR

(43) Date of publication of application: 08.07.2020
(73) Proprietor: Pacific Industrial Co., Ltd., Ogaki-shi, Gifu-ken 503-8603 (JP)
(72) Inventor: KANAMORI, Kazuhiro, Gifu, 5038603 (JP); NAKAYAMA, Koji, Gifu, 5038603 (JP); MITSU, Terumasa, Gifu, 5038603 (JP)
(74) Representative: Kramer Barske Schmidtchen Patentanwälte PartG mbB
(86) International application number: PCT/JP2018/042031
(87) International publication number: WO 2020/100221

(56) References cited:
- EP-A1- 0 391 307
- JP-A- 2001 263 515
- JP-U- S51 137 118

## Description

### TECHNICAL FIELD

The present disclosure relates to a check valve assembly having a check valve.

### BACKGROUND ART

Patent Literature 1 describes a structure having a check valve midway through a flow passage, and a pipe downstream of this check valve joined to another pipe. In such a structure, the pipes to be joined together, or the pipe and the check valve, are connected with a joint. EP 0 391 307 A1 discloses a hydraulic control circuit arrangement including different valves.

### RELATED ART DOCUMENTS

### PATENT DOCUMENTS

Patent Document 1: Japanese patent application publication No. JP 2016-107745 A (paragraph [0042], [0045], and Fig. 1)

### SUMMARY OF THE INVENTION

### PROBLEMS TO BE SOLVED BY THE INVENTION

The large number of connection points among the check valve, pipes, and joints in the structure shown in Patent Literature 1 required elaborate operations for connecting them and forming seals, and had a higher risk of fluid leakage. Therefore, it is desired to reduce the number of assembling steps and the risk of fluid leakage.

### MEANS OF SOLVING THE PROBLEMS

The invention set forth in claim 1 made to solve the problem noted above resides in a check valve assembly.

### BRIEF DESCRIPTION OF THE DRAWINGS

Fig. 1 is a perspective view of a check valve assembly according to one embodiment of the present disclosure.
Fig. 2 is a right side view of the check valve assembly.
Fig. 3 is an A-A cross-sectional view of the check valve assembly.
Fig. 4 is a left side view of the check valve assembly.
Fig. 5 is an enlarged cross-sectional view of an expansion valve in an open state.
Fig. 6(A) is an enlarged cross-sectional view of a first valve member in a closed state, and (B) is an enlarged cross-sectional view of the first valve member in an open state.
Fig. 7(A) is a perspective view of a check valve assembly according to another embodiment, and (B) is a cross-sectional front view of the check valve assembly according to another embodiment.
Fig. 8(A) is a perspective view of a check valve assembly according to another embodiment, and (B) is a cross-sectional front view of the check valve assembly according to another embodiment.
Fig. 9(A) is a cross-sectional front view of a check valve assembly according to another embodiment, and (B) is a left side view of the check valve assembly according to another embodiment.

### MODE FOR CARRYING OUT THE INVENTION

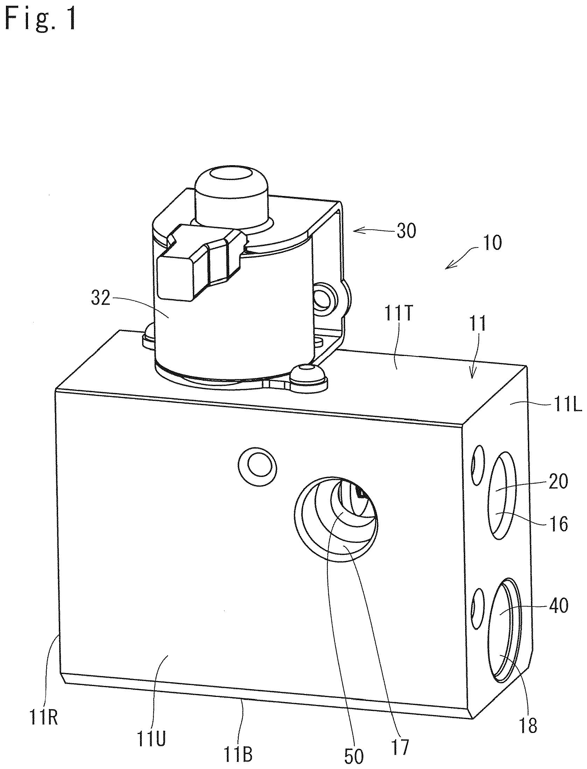

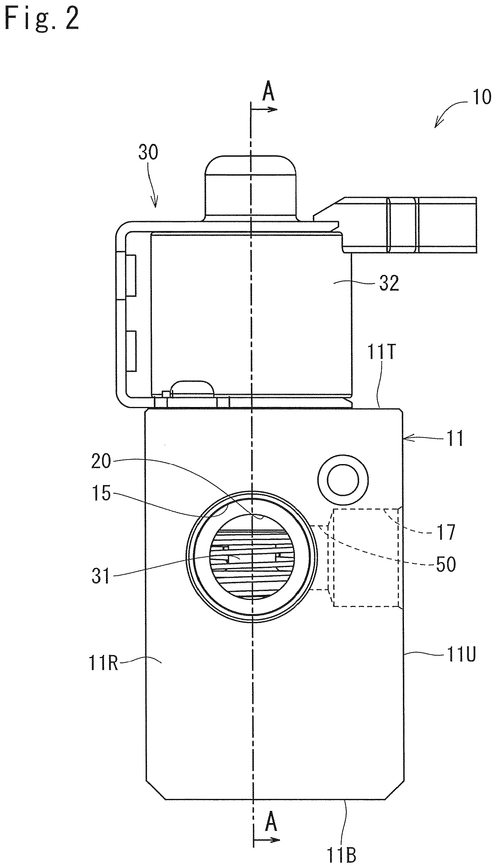

The check valve assembly 10 of this embodiment will be hereinafter described with reference to Fig. 1 to Fig. 6. The check valve assembly 10 of this embodiment shown in Fig. 1 is provided in a refrigerant circuit of a car air conditioner, for example, and connected to a piping arrangement.

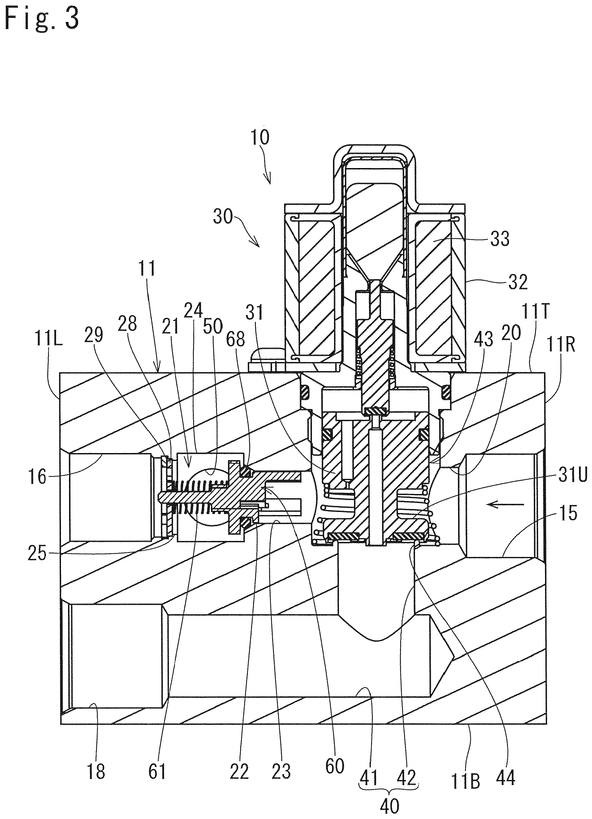

As shown in Fig. 1, the check valve assembly 10 has a body 11 that is a horizontally long, cuboidal shape. Hereinafter, the longitudinal direction of the body 11 shall be referred to as left and right direction, and the side faces of the body 11 facing left and right in Fig. 3 shall be referred to as the left-side face 11L and right-side face 11R, respectively. The side closer to the viewer and the side farther from the viewer in Fig. 3 shall be referred to as the front side and rear side of the body 11, respectively, and the outer faces of the body 11 facing upward and downward shall be referred to as the top face 11T and bottom face 11B of the body 11, respectively. In this embodiment, as one example, the outer faces of the body 11 adjacent each other are orthogonal to each other. The body 11 is formed by drilling a plurality of holes such as a first flow passage 20, a second flow passage 40, and the like as will be described below in a cuboidal component, for example. Such a cuboidal component may be made of resin or metal, for example, and can be produced by integral forming, integral casting, forging, and so on.

As shown in Fig. 3, the body 11 is provided with a first flow passage 20 extending straight through the body 11 in the left and right direction. One end of the first flow passage 20 serves as a first inlet port 15 that opens in the right-side face 11R of the body 11, while the other end of the first flow passage 20 serves as a first outlet port 16 that opens in the left-side face 11L of the body 11.

A first valve member accommodating chamber 21 is formed midway through the first flow passage 20. An upstream end portion (i.e., right-side end portion) of the first valve member accommodating chamber 21 is constricted and serves as a first valve opening 22. The first valve member accommodating chamber 21 is provided with an enlarged-diameter part 24 having an enlarged diameter on the downstream side of the first valve opening 22. On the downstream side of the enlarged-diameter part 24 (i.e., left side) is a downstream reduced-diameter part 25 having a smaller diameter than the enlarged-diameter part 24. The first flow passage 20 further includes an upstream reduced-diameter part 23 having a smaller diameter than the enlarged-diameter part 24 extending toward the upstream of the first valve opening 22 (i.e., right side).

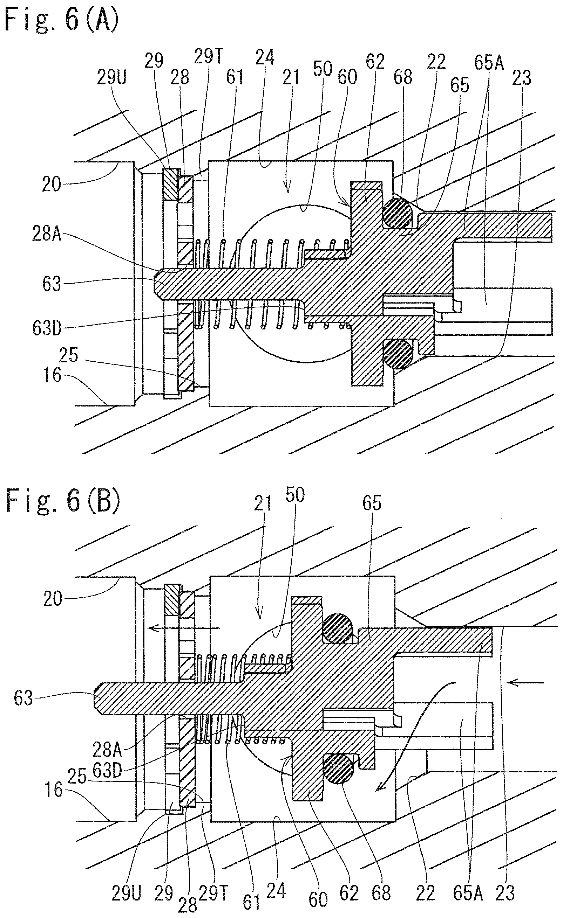

The first valve member accommodating chamber 21 accommodates a first valve member 60 that opens and closes the first valve opening 22. The first valve member 60 moves linearly in the left and right direction to be positioned at a closing position (see Fig. 6(A)) where it shuts the first valve opening 22 and an opening position (see Fig. 6(B)) where it opens the first valve opening 22. The first valve member 60 is biased toward the first valve opening 22 by a compression coil spring 61. In this embodiment, the first valve member 60 and the first valve opening 22 make up a check valve. The first valve member 60 will be described in more detail later.

As shown in Fig. 3, the body 11 is provided with a substantially L-shaped second flow passage 40 intersecting the first flow passage 20. The second flow passage 40 is made up of a lateral hole 41 and a vertical hole 42. The lateral hole 41 is positioned below the first flow passage 20 and extends in the left and right direction. The left end portion of the lateral hole 41 is a second outlet port 18 that opens in the left-side face 11L of the body 11, and the right-side end portion of the lateral hole 41 communicates with the vertical hole 42. The vertical hole 42 extends upward from the right-side end portion of the lateral hole 41 to intersect with the first flow passage 20, and opens in the top face 11T of the body 11. In this embodiment, as one example, the lateral hole 41 is parallel with the first flow passage 20, while the vertical hole 42 is orthogonal to the lateral hole 41 and the first flow passage 20.

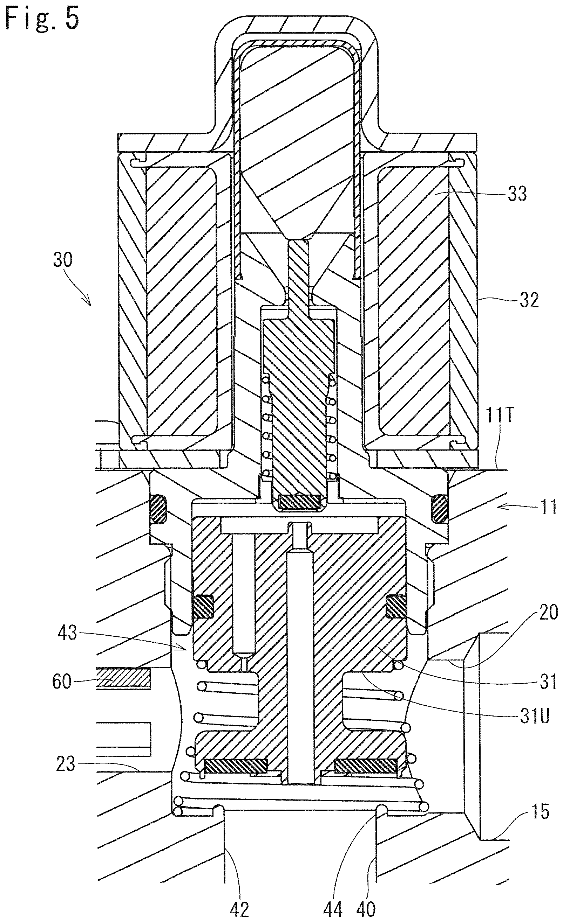

As shown in Fig. 3 and Fig. 5, the body 11 has a second valve member accommodating chamber 43 from an intersecting part where the second flow passage 40 and the first flow passage 20 intersect to a part of the second flow passage 40 above the intersecting part. A valve member holder 32 is fitted to an opening of the second flow passage 40 in the top face 11T, whereby the second valve member accommodating chamber 43 is closed. Namely, the second valve member accommodating chamber 43 is a region of the second flow passage 40 between a second valve opening 44 which is the exit from the intersecting part of the second flow passage leading to the second outlet port 18, and the valve member holder 32.

The second valve member accommodating chamber 43 accommodates a second valve member 31 that opens and closes the second valve opening 44. More specifically, the second valve member 31 moves linearly in the direction in which the vertical hole 42 extends (i.e., up and down direction) to be positioned at a closing position (see Fig. 3) where it shuts the valve opening 44 and an opening position (see Fig. 5) where it opens the second valve opening 44. The second valve member 31 is a columnar member extending in the direction in which the vertical hole 42 extends, with an annular groove formed in an outer circumferential surface. This annular groove 31U in the outer circumferential surface forms a space that allows a fluid to pass through between the inner surface of the intersecting part of the first flow passage 20 with the second flow passage 40 and the second valve member 31. When the second valve member 31 assumes a closed state, the fluid that has flowed in from the first inlet port 15 passes through the first flow passage 20 and flows out only from the first outlet port 16. When the second valve member 31 assumes an open state, the fluid flows out from both of the first outlet port 16 and the second outlet port.

The second valve member 31 is supported by the valve member holder 32 such as to be movable linearly. The valve member holder 32 includes a drive source 33 for moving the valve member 31, and extends out from the body 11. The drive source 33 is attached such as to shut the opening of the second flow passage 40. In this embodiment, as one example, the drive source 33 is a solenoid, i.e., the check valve assembly 10 is provided with an electromagnetic valve 30 that includes the second valve member 31, valve member holder 32, drive source 33, and second valve opening 44.

As shown in Fig. 6(A), the first valve member 60 is made up of a disc-like base part 62, a pin part 63 protruding from the base part 62 to one axial side, and a leg part 65 protruding from the base part 62 to the other axial side. More specifically, the pin part 63 is positioned on the center axis of the base part 62, and includes a step surface 63D in a midway point of the protruding direction so that the protruding distal side is reduced in diameter. The leg part 65 has an annular groove in an outer circumferential surface at the foot of the leg part 65, with an O-ring 68 fitted in this annular groove. The O-ring 68 provides a seal between the first valve member 60 and the first valve opening 22 in a closed state. The leg part 65 is made up of a plurality of (e.g., three) discrete protrusions 65A projecting away from the base part 62 and arranged around the center axis of the base part 62. These plurality of discrete protrusions 65A each have a surface facing outside in the radial direction of the base part 62, and the surface is a circular arc surface arranged on an imaginary cylindrical surface being coaxial with the center axis of the base part 62 and having a smaller diameter than the base part 62.

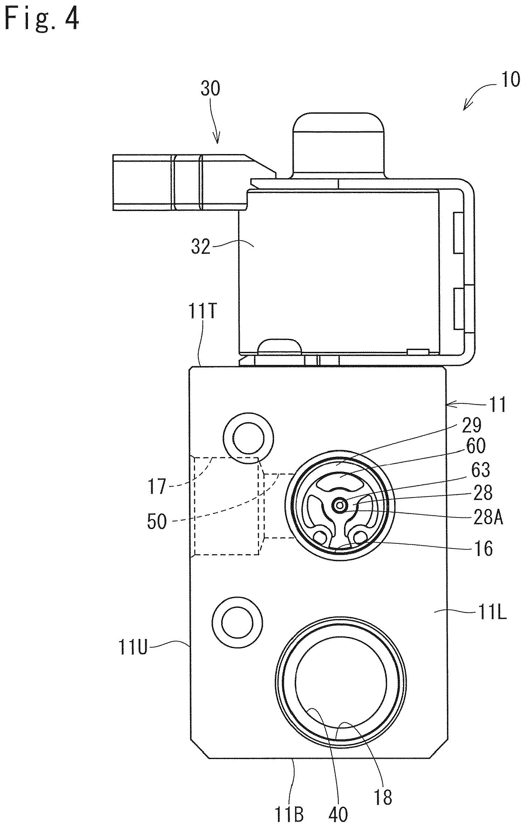

A retainer means is provided on the inner circumferential surface of the downstream reduced-diameter part 25 of the first flow passage 20 to stop the first valve member 60 from moving further to the first outlet port 16. This retainer means is made up of a stopper 28 and a C-ring 29 (see Fig. 4 and Fig. 6). The stopper 28 is substantially disc-like and has a passage hole 28A extending through a central part. The stopper 28 is also provided with a plurality of through holes separately from the passage hole 28A for the fluid to pass through. The stopper 28 is abutted on an annular protrusion 29T protruding from an inner face of the downstream reduced-diameter part 25 of the first flow passage 20 from the downstream side (left side). The C-ring 29 is abutted on the stopper 28 from the downstream side, as well as fitted in an annular groove 29U provided in an inner face of the downstream reduced-diameter part 25 so that it is fixed to the downstream reduced-diameter part 25 and retains the stopper 28.

In this embodiment, the first valve member accommodating chamber 21 is a part of the first flow passage 20 positioned downstream of the valve opening 22 and upstream of the stopper 28.

As shown in Fig. 6(A), the pin part 63 of the first valve member 60 is passed through the passage hole 28A of the stopper 28. More specifically, a distal end portion of the pin part 63 protruding from the step surface 63D is passed through the passage hole 28A of the stopper 28. The pin part 63 at a portion from the step surface 63D to the base part 62 side has a larger diameter than the passage hole 28A of the stopper 28, so that this large-diameter part stops the first valve member 60 from moving further downstream. The leg part 65 (more specifically, the circular arc surfaces of the plurality of discrete protrusions 65A) of the first valve member 60 is fitted into the upstream reduced-diameter part 23 of the first flow passage 20.

A compression coil spring 61 wound around the pin part 63 is set between the base part 62 of the first valve member 60 and the stopper 28. As mentioned above, the compression coil spring 61 biases the first valve member 60 to be in the closed state. When the pressure of the fluid upstream of the first valve opening 22 in the first flow passage 20 causes the first valve member 60 to move downstream against the restoring force of the compression coil spring 61, the first valve member 60 is positioned in an open state as shown in Fig. 6(B), so that the fluid flows from upstream of the first valve opening 22 to the downstream. At this time, the pin part 63 of the first valve member 60 slides in the passage hole 28A of the stopper 28, and the leg part 65 of the first valve member 60 slides in the upstream reduced-diameter part 23 of the first flow passage. The same applies when the first valve member 60 returns from the open state to the closed state.

As shown in Fig. 6(A) and Fig. 6(B), the pin part 63 and the leg part 65 of the first valve member 60 remain passed through the passage hole 28A of the stopper 28 and the upstream reduced-diameter part 23 of the first flow passage 20 respectively within the range of the linear movement of the first valve member 60. As the first valve member 60 is supported at both end portions while it moves linearly in this way, the linear movement of the first valve member 60 is made stable. When the first valve member 60 assumes the open state, the fluid passes through the gaps among the plurality of discrete protrusions 65A of the leg part 65 and through the first valve opening 22.

The enlarged-diameter part 24 of the first valve member accommodating chamber 21 has an inside diameter set so as to have the inner circumferential surface of the enlarged-diameter part 24 spaced apart from the first valve member 60. Therefore, the enlarged-diameter part 24 is a non-sliding part, where the first valve member 60 does not make sliding contact, within the range of the linear movement of the first valve member 60.

As shown in Fig. 3, the body 11 is provided with a side flow passage 50 that opens in an inner circumferential surface of the first valve member accommodating chamber 21. In this embodiment, the side flow passage 50 extends in the front to back direction, and opens at one end in the rear face 11U of the body 11 facing rearward, forming a second inlet port 17 (see Fig. 1, Fig. 2, and Fig. 4). Thus, the fluid from the first inlet port 15 and the fluid from the second inlet port 17 merge in the first valve member accommodating chamber 21.

If the side flow passage 50 in the body 11 were formed by drilling, burrs could be formed, and could protrude inside the first flow passage 20. In this case, if such burrs are formed on the inner face of the first flow passage 20 in the part where the first valve member 60 slides on, the problem will arise that the burrs hinder smooth linear movement of the first valve member 60. In the check valve assembly 10 of this embodiment, the enlarged-diameter part 24 of the first valve member accommodating chamber 21 where the side flow passage 50 opens is large enough to be spaced apart from the first valve member 60, i.e., it is the non-sliding part which the first valve member 60 does not slide on. Therefore, even if burrs are left protruded inside the first flow passage after the side flow passage 50 has been drilled in the body 11, such burrs will be prevented from causing a resistance to the linear sliding movement of the first valve member 60 so that the linear movement of the first valve member 60 can be made smoothly.

In the check valve assembly 10 of this embodiment, the first valve member 60 opening and closing the first valve opening 22 midway through the first flow passage 20 and being biased from the downstream side toward the first valve opening 22 constitutes a check valve together with the first valve opening 22. The side flow passage 50 opens in an inner side face of the first valve member accommodating chamber 21 of the first flow passage 20 in this embodiment. Namely, the side flow passage 50 joins the first flow passage 20 inside the body 11. By providing a joint part of flow passages and a check valve inside the body 11 this way, conventional joints and piping required in structures that have a check valve can be dispensed with, so that the number of assembling steps and the risk of fluid leakage can both be reduced. Since the part where the side flow passage 50 joins the first flow passage 20 is the first valve member accommodating chamber 21 midway through the first flow passage 20, the body 11 can be made more compact in the extending direction of the first flow passage 20 as compared to when the joint part is downstream of the first valve member accommodating chamber 21.

Moreover, in this embodiment, the body 11 is provided with the second flow passage 40 that intersects the first flow passage 20 upstream of the first valve opening 22. This spares the trouble of the connecting of the second flow passage 40 as compared to when the second flow passage 40 is provided to a different pipe than the body 11. The second valve opening 44, which is the exit from the first flow passage 20 to the second flow passage 40 leading to the second outlet port 18, is opened and closed by the second valve member 31 accommodated in the intersecting part of the first flow passage 20 and the second flow passage 40. One end portion of the second flow passage 40 opposite from the second outlet port 18 opens in the outer face of the body 11, but this opening is shut by the drive source 33 that drives the second valve member 31. As the opening formed in the outer face of the body 11 after drilling the second flow passage 40 is shut by the drive source 33 of the second valve member 31 in this embodiment, the opening of the second flow passage 40 is made good use of, as compared to a structure where an opening of the second flow passage 40 is simply closed. In this embodiment, the first flow passage 20 and the lateral hole 41 of the second flow passage 40 are arranged parallel, and their end portions, the first outlet port 16 and the second outlet port 18, are located on the same side. Thus, the body 11 can be made more compact.

Moreover, in this embodiment, the body 11 can be made by drilling a plurality of holes such as the first flow passage 20, second flow passage 40 and the like in a cuboidal component that has been formed or cast in one piece. As above, the body 11 can be made by merely drilling holes in a simple shape like a cuboid, thereby facilitating the production of the check valve assembly 10.

The right-side face 11R, left-side face 11L, rear face 11U, and top face 11T of the body 11 in this embodiment correspond to "first outer face", "second outer face", "third outer face", and "fourth outer face", respectively, in the claims. A boundary part between the lateral hole 41 and the vertical hole 42 of the second flow passage 40 corresponds to "bent part" in the claims. When connected to a pipe or the like and used, the check valve assembly 10 may be disposed such that the longitudinal direction of the body 11 is in the horizontal direction, or such that the longitudinal direction of the body 11 is in the up and down direction, or such that the longitudinal direction of the body 11 is inclined to the horizontal direction.

The state described as "parallel" herein shall mean not only two members that are absolutely parallel to each other but also two members inclined to each other at an angle of 5 degrees or less. The term "orthogonal" herein shall mean not only two members crossing precisely at 90 degrees but also two members intersecting each other at an angle of 85 degrees or more and 95 degrees or less.

### [Other embodiments]

(1) While the check valve assembly 10 is applied to a refrigerant circuit for a car air conditioner in the structure shown in the embodiment described above, the check valve assembly 10 is not particularly limited to this application and may be used for a heat medium circuit, for example.

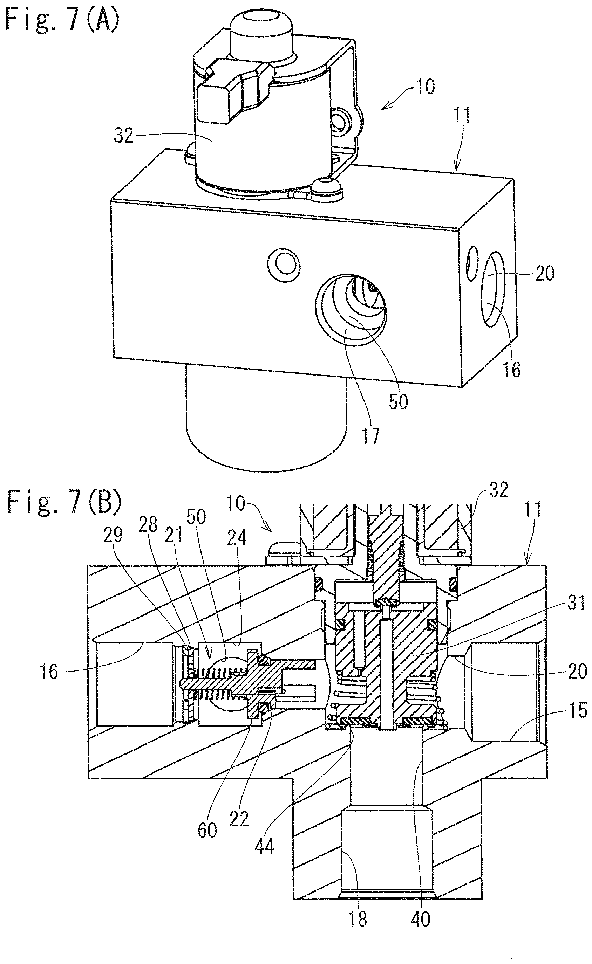

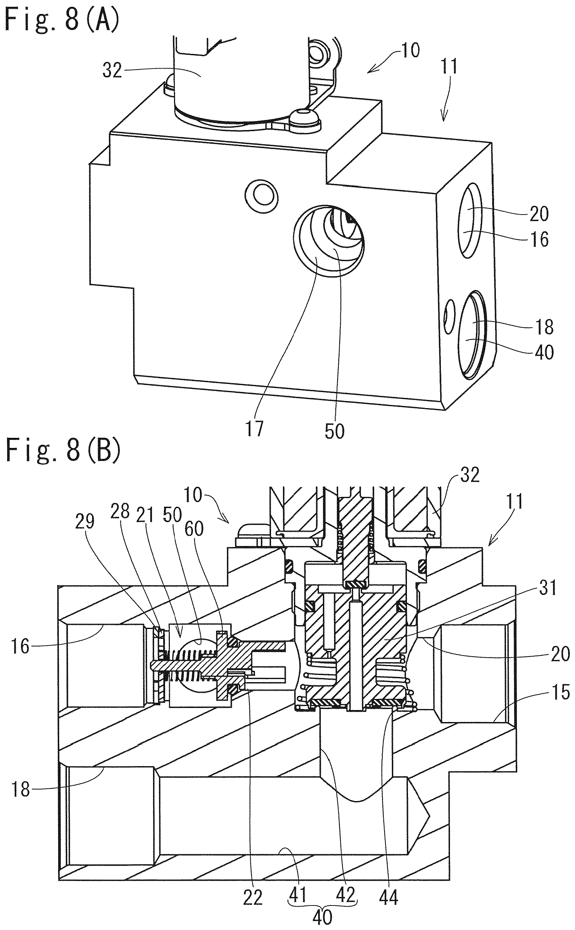

(2) While the body 11 is cuboidal in the embodiment described above, the body is not limited to this shape. The body 11 may for example be trapezoidal or parallelogram in top view or front view. Alternatively, the body 11 may have a shape wherein a cuboid is coupled axially to a columnar member, for example (see Fig. 7(A) and Fig. 7(B)), or, a shape wherein part of a cuboid is removed in a cuboidal shape (see Fig. 8(A) and Fig. 8(B)). Alternatively, the body 11 may be shaped such that a first tubular part having the first flow passage 20 inside and a second tubular part having the second flow passage 40 inside intersect each other. In this case, the first tubular part may be provided with a branch pipe branched therefrom to form the side flow passage therein.

(3) In the embodiment above, a third valve opening may be provided by constricting a midway portion of the lateral hole 41 of the second flow passage 40, with a third valve member opening and closing this third valve opening from the downstream side and being urged toward the third valve opening, similarly to the first flow passage 20. In this case, as in the first valve member accommodating chamber 21 of the first flow passage 20, a third valve member accommodating chamber for accommodating the third valve member may be provided, with a flow passage opened at one end in an outer face of the body 11 for introducing a fluid and opened at the other end in an inner side face of the third valve member accommodating chamber, similarly to the side flow passage 50.

(4) While the second outlet port 18 of the lateral hole 41 of the second flow passage 40 opens in the left-side face 11L of the body 11 in the embodiment described above, the port may open in the right-side face 11R.

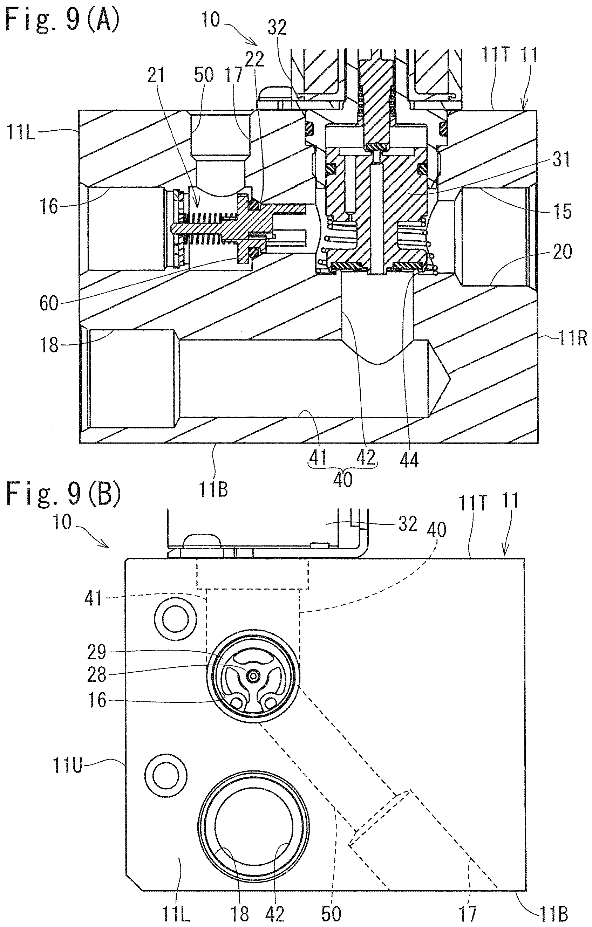

(5) In the embodiment described above, the outer face of the body 11 where the side flow passage 50 opens, and the outer face where the distal end of the second flow passage 40 opens at the valve member holder 32 side, may be the same side (see Fig. 9(A)), or may be the sides facing opposite from each other (see Fig. 9(B)).

(6) While the lateral hole 41 of the second flow passage 40 is parallel to the first flow passage 20 in the embodiment described above, it may be inclined.

(7) While the vertical hole 42 of the second flow passage 40 is orthogonal to the first flow passage 20 in the embodiment described above, it may be inclined.

(8) While the lateral hole 41 of the second flow passage 40 is orthogonal to the vertical hole 42 in the embodiment described above, it may be inclined.

(9) In the embodiment described above, the second flow passage 40 intersecting the first flow passage 20 may be linear as shown in Fig. 7(A) and Fig. 7(B).

(11) While the first flow passage 20 is linear in the embodiment described above, it may be bent midway.

While the second valve member 31 is configured to close the second valve opening 44 by covering the second valve opening 44 in the embodiment described above, the second valve member 31 may be configured to shut the second valve opening 44 by being passed through the second valve opening 44, as in a needle valve member used in an expansion valve or the like.

### DESCRIPTION OF THE REFERENCE NUMERAL

- 10: Check valve assembly
- 11: Body
- 15: First inlet port
- 16: First outlet port
- 17: Second inlet port
- 20: First flow passage
- 21: First valve member accommodating chamber
- 22: First valve opening
- 50: Side flow passage
- 60: First valve member

## Claims

1. A check valve assembly (10) comprising:
a body (11);
a first flow passage (20) extending through the body and having one end forming a first inlet port (15) that opens in an outer face of the body (11) and another end forming a first outlet port (16) that opens in an outer face of the body (11);
a first valve member accommodating chamber (21) provided midway through the first flow passage (20);
a first valve opening (22) formed by constricting an upstream end portion of the first valve member accommodating chamber (21); and
a first valve member (60) accommodated in the first valve member accommodating chamber (21) such as to be movable linearly to open and close the first valve opening (22) and being biased toward the first valve opening (22); **characterized by**:
a side flow passage (50) intersecting the first flow passage (20) and having one end forming a second inlet port (17) that opens in an outer face of the body (11) and another end opening in an inner side face of the first valve member accommodating chamber (21);
a second flow passage (40) extending through the body (11) and having a bent part midway, the second flow passage (40) from the bent part to one end intersecting a part of the first flow passage (20) upstream of the first valve opening (22), while the second flow passage (40) from the bent part to another end being parallel to the first flow passage (20) and extending as far as to an outer face of the body (11) where the first outlet port (16) is provided;
a second outlet port (18) provided to another end portion of the second flow passage (40);
a second valve opening (44) that is an exit from the first flow passage (20) to the second flow passage (40) leading to the second outlet port (18);
a second valve member (31) accommodated in an intersecting part of the first flow passage (20) and the second flow passage (40) to open and close the second valve opening (44);
a drive source (33) attached such as to shut an opening at the one end of the second flow passage (40) and to linearly move the second valve member (31); and
a retainer means (28, 29) provided on an inner circumferential surface of a downstream reduced-diameter part (25) of the first flow passage (20) on the downstream side of an enlarged-diameter part (24) of the first valve member accommodating chamber (21) to stop the first valve member (60) from moving further to the first outlet port (16), wherein
the first valve member (60) is made up of a disc-like base part (62), a pin part (63) protruding from the base part (62) to one axial side, and a leg part (65) protruding from the base part (62) to the other axial side, a protruding distal side of the pin part (63) being reduced in diameter,
the pin part (63) of the first valve member (60) is passed through a passage hole (28A) of the retainer means (28, 29) and slides in the passage hole (28A), and the leg part (65) of the first valve member (60) slides in an upstream reduced-diameter part (23) of the first flow passage (20) extending toward the upstream of the first valve opening (22) such that the first valve member (60) is supported at both end portions so as to be linearly movable.

2. The check valve assembly (10) according to claim 1, wherein
the first valve member accommodating chamber (21) is provided with an enlarged-diameter part (24) having a larger diameter than the first valve opening (22) so as to have an inner circumferential surface spaced apart from the first valve member (60), and
the side flow passage (50) opens in an inner circumferential surface of the enlarged-diameter part (24).

3. The check valve assembly (10) according to claim 1 or 2, wherein
the body (11) has a cuboidal shape,
of the outer faces of the body (11), a first outer face (11R) where the first inlet port (15) opens and a second outer face (11L) where the first outlet port (16) opens are positioned to face opposite from each other, and
of the outer faces of the body (11), a third outer face (11U) where the second inlet port (17) opens and a fourth outer face (11T) where an end portion of the second flow passage (40) opens at the drive source (33) side are orthogonal to the first outer face (11R) and the second outer face (11L).

4. The check valve assembly (10) according to claim 3, wherein the third outer face (11U) and the fourth outer face (11T) are orthogonal to each other.

## Patentansprüche

1. Rückschlagventilbaugruppe (10) mit:
einem Körper (11);
einem ersten Strömungsdurchgang (20), der sich durch den Körper erstreckt und der ein Ende, das eine erste Einlassöffnung (15) ausbildet, die sich in einer äußeren Fläche des Körpers (11) öffnet, und ein anderes Ende, das eine erste Auslassöffnung (16) ausbildet, die sich in einer äußeren Fläche des Körpers (11) öffnet, aufweist;
einer ersten Ventilbauteilaufnahmekammer (21), die mitten in dem ersten Strömungsdurchgang (20) vorgesehen ist;
einer ersten Ventilöffnung (22), die durch Verengen eines Stromaufwärtsendabschnitts der ersten Ventilbauteilaufnahmekammer (21) ausgebildet ist; und
einem ersten Ventilbauteil (60), das in der ersten Ventilbauteilaufnahmekammer (21) derart aufgenommen ist, dass es zum Öffnen und Verschließen der ersten Ventilöffnung (22) linear bewegbar ist, und das in Richtung der ersten Ventilöffnung (22) vorgespannt ist; **gekennzeichnet durch**:
einen seitlichen Strömungsdurchgang (50), der den ersten Strömungsdurchgang (20) schneidet und der ein Ende, das eine zweite Einlassöffnung (17) ausbildet, die sich in einer äußeren Fläche des Körpers (11) öffnet, und ein anderes Ende, das sich in einer innenseitigen Fläche der ersten Ventilbauteilaufnahmekammer (21) öffnet, aufweist;
einen zweiten Strömungsdurchgang (40), der sich durch den Körper (11) erstreckt und der einen gebogenen Teil in der Mitte aufweist, wobei der zweite Strömungsdurchgang (40) von dem gebogenen Teil zu einem Ende einen Teil des ersten Strömungsdurchgangs (20) stromaufwärts der ersten Ventilöffnung (22) schneidet, während der zweite Strömungsdurchgang (40) von dem gebogenen Teil zu einem anderen Ende parallel zu dem ersten Strömungsdurchgang (20) ist und sich bis zu einer äußeren Fläche des Körpers (11), wo die erste Auslassöffnung (16) vorgesehen ist, erstreckt;
eine zweite Auslassöffnung (18), die an einem anderen Endabschnitt des zweiten Strömungsdurchgangs (40) vorgesehen ist;
eine zweite Ventilöffnung (44), die ein Ausgang von dem ersten Strömungsdurchgang (20) zu dem zweiten Strömungsdurchgang (40) ist, der zu der zweiten Auslassöffnung (18) führt;
ein zweites Ventilbauteil (31), das in einem sich schneidenden Teil des ersten Strömungsdurchgangs (20) und des zweiten Strömungsdurchgangs (40) zum Öffnen und Verschließen der zweiten Ventilöffnung (44) aufgenommen ist;
eine Antriebsquelle (33), die derart angebracht ist, dass sie eine Öffnung an dem einen Ende des zweiten Strömungsdurchgangs (40) verschließt und das zweite Ventilbauteil (31) linear bewegt; und
ein Haltemittel (28, 29), das auf einer Innenumfangsoberfläche eines Stromabwärtsteils (25) des ersten Strömungsdurchgangs (20) mit reduziertem Durchmesser auf der Stromabwärtsseite eines Teils (24) der ersten Ventilbauteilaufnahmekammer (21) mit vergrößertem Durchmesser zum Stoppen, dass sich das erste Ventilbauteil (60) weiter zu der ersten Auslassöffnung (16) bewegt, vorgesehen ist, bei der
das erste Ventilbauteil (60) aus einem scheibenartigen Basisteil (62), einem Stiftteil (63), der von dem Basisteil (62) zu einer axialen Seite vorsteht, und einem Beinteil (65), der von dem Basisteil (62) zu der anderen axialen Seite vorsteht, wobei eine vorstehende distale Seite des Stiftteils (63) hinsichtlich Durchmessers reduziert ist, ausgebildet ist,
der Stiftteil (63) des ersten Ventilbauteils (60) durch ein Durchgangsloch (28A) des Haltemittels (28, 29) verläuft und in dem Durchgangsloch (28A) gleitet, und der Beinteil (65) des ersten Ventilbauteils (60) in einem Stromaufwärtsteil (23) des ersten Strömungsdurchgangs (20) mit reduziertem Durchmesser, der sich in Richtung der Stromaufwärtsseite der ersten Ventilöffnung (22) erstreckt, gleitet, so dass das erste Ventilbauteil (60) an beiden Endabschnitten so abgestützt ist, dass es linear bewegbar ist.

2. Rückschlagventilbaugruppe (10) nach Anspruch 1, bei der
die erste Ventilbauteilaufnahmekammer (21) mit einem Teil (24) mit vergrößertem Durchmesser, der einen größeren Durchmesser als die erste Ventilöffnung (22) aufweist, so dass er eine Innenumfangsoberfläche, die von dem ersten Ventilbauteil (60) beabstandet ist, aufweist, versehen ist, und
sich der seitliche Strömungsdurchgang (50) in einer Innenumfangsoberfläche des Teils (24) mit vergrößertem Durchmesser öffnet.

3. Rückschlagventilbaugruppe (10) nach Anspruch 1 oder 2, bei der
der Körper (11) eine würfelförmige Form aufweist,
von den äußeren Flächen des Körpers (11) eine erste äußere Fläche (11R), wo sich die erste Einlassöffnung (15) öffnet, und eine zweite äußere Fläche (11L), wo sich die erste Auslassöffnung (16) öffnet, so positioniert sind, dass sie zueinander entgegengesetzt gewandt sind, und von den äußeren Flächen des Körpers (11) eine dritte äußere Fläche (1 1U), wo sich die zweite Einlassöffnung (17) öffnet, und eine vierte äußere Fläche (11T), wo sich ein Endabschnitt des zweiten Strömungsdurchgangs (40) an der Antriebsquellen-(33)-Seite öffnet, orthogonal zu der ersten äußeren Fläche (11R) und der zweiten äußeren Fläche (11L) sind.

4. Rückschlagventilbaugruppe (10) nach Anspruch 3, bei der die dritte äußere Fläche (11U) und die vierte äußere Fläche (11T) orthogonal zueinander sind.

## Revendications

1. Ensemble de clapet anti-retour (10) comprenant :
un corps (11) ;
un premier passage d'écoulement (20) s'étendant à travers le corps et ayant une extrémité formant un premier orifice d'entrée (15) qui s'ouvre dans une face externe du corps (11) et une autre extrémité formant un premier orifice de sortie (16) qui s'ouvre dans une face externe du corps (11) ;
une première chambre de logement d'élément de clapet (21) prévue à mi-chemin à travers le premier passage d'écoulement (20) ;
une première ouverture de clapet (22) formée en rétrécissant une partie d'extrémité amont de la première chambre de logement d'élément de clapet (21) ; et
un premier élément de clapet (60) logé dans la première chambre de logement d'élément de clapet (21) de manière à être mobile linéairement pour ouvrir et fermer la première ouverture de clapet (22) et étant sollicité vers la première ouverture de clapet (22) ; **caractérisé par** :
un passage d'écoulement latéral (50) coupant le premier passage d'écoulement (20) et ayant une extrémité formant un deuxième orifice d'entrée (17) qui s'ouvre dans une face externe du corps (11) et une autre extrémité s'ouvrant dans une face latérale interne de la première chambre de logement d'élément de clapet (21) ;
un deuxième passage d'écoulement (40) s'étendant à travers le corps (11) et ayant une partie courbée à mi-chemin, le deuxième passage d'écoulement (40) depuis la partie courbée jusqu'à une extrémité coupant une partie du premier passage d'écoulement (20) en amont de la première ouverture de clapet (22), tandis que le deuxième passage d'écoulement (40) depuis la partie courbée jusqu'à l'autre extrémité est parallèle au premier passage d'écoulement (20) et s'étend jusqu'à une face externe du corps (11) où le premier orifice de sortie (16) est prévu ;
un deuxième orifice de sortie (18) prévu sur une autre partie d'extrémité du deuxième passage d'écoulement (40) ;
une deuxième ouverture de clapet (44) qui est une sortie du premier passage d'écoulement (20) vers le deuxième passage d'écoulement (40) menant au deuxième orifice de sortie (18) ;
un deuxième élément de clapet (31) logé dans une partie d'intersection du premier passage d'écoulement (20) et du deuxième passage d'écoulement (40) pour ouvrir et fermer la deuxième ouverture de clapet (44) ;
une source d'entraînement (33) fixée de manière à fermer une ouverture à ladite une extrémité du deuxième passage d'écoulement (40) et à déplacer linéairement le deuxième élément de clapet (31) ; et
un moyen de retenue (28, 29) prévu sur une surface circonférentielle interne d'une partie aval de diamètre réduit (25) du premier passage d'écoulement (20) sur le côté aval d'une partie de diamètre agrandi (24) de la première chambre de logement d'élément de clapet (21) pour empêcher le premier élément de clapet (60) de se déplacer davantage vers le premier orifice de sortie (16), dans lequel
le premier élément de clapet (60) est constitué d'une partie de base en forme de disque (62), d'une partie de broche (63) faisant saillie depuis la partie de base (62) vers un côté axial, et d'une partie de jambe (65) faisant saillie depuis la partie de base (62) vers l'autre côté axial, un côté distal en saillie de la partie de broche (63) étant réduit en diamètre,
la partie de broche (63) du premier élément de clapet (60) est passée à travers un trou de passage (28A) du moyen de retenue (28, 29) et coulisse dans le trou de passage (28A), et la partie de jambe (65) du premier élément de clapet (60) coulisse dans une partie amont de diamètre réduit (23) du premier passage d'écoulement (20) s'étendant vers l'amont de la première ouverture de clapet (22) de sorte que le premier élément de clapet (60) est supporté au niveau des deux parties d'extrémité de manière à être linéairement mobile.

2. Ensemble de clapet anti-retour (10) selon la revendication 1, dans lequel
la première chambre de logement d'élément de clapet (21) est pourvue d'une partie de diamètre agrandi (24) ayant un diamètre plus grand que la première ouverture de clapet (22) de façon à avoir une surface circonférentielle interne espacée du premier élément de clapet (60), et
le passage d'écoulement latéral (50) s'ouvre dans une surface circonférentielle interne de la partie à diamètre agrandi (24).

3. Ensemble de clapet anti-retour (10) selon la revendication 1 ou 2, dans lequel
le corps (11) a une forme cuboïde,
des faces externes du corps (11), une première face externe (11R) où s'ouvre le premier orifice d'entrée (15) et une deuxième face externe (11L) où s'ouvre le premier orifice de sortie (16) sont positionnées pour être opposées l'une à l'autre, et
parmi les faces externes du corps (11), une troisième face externe (11U) où s'ouvre le deuxième orifice d'entrée (17) et une quatrième face externe (11T) où s'ouvre une partie d'extrémité du deuxième passage d'écoulement (40) du côté de la source d'entraînement (33) sont orthogonales à la première face externe (11R) et à la deuxième face externe (11L).

4. Ensemble de clapet anti-retour (10) selon la revendication 3, dans lequel la troisième face externe (11U) et la quatrième face externe (11T) sont orthogonales l'une à l'autre.
